(19) Europäisches Patentamt
European Patent Office
Office européen des brevets

(11) **EP 1 099 945 A2**

(12) **EUROPÄISCHE PATENTANMELDUNG**

(43) Veröffentlichungstag:
**16.05.2001  Patentblatt 2001/20**

(51) Int Cl.⁷: **G01M 1/24**, G01M 1/34

(21) Anmeldenummer: **00124493.8**

(22) Anmeldetag: **09.11.2000**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **12.11.1999  DE 19954475**

(71) Anmelder: **MTU MOTOREN- UND
TURBINEN-UNION FRIEDRICHSHAFEN GMBH
88040 Friedrichshafen (DE)**

(72) Erfinder: **Bema, Otmar
88045 Friedrichshafen (DE)**

(74) Vertreter: **Winter, Josef
MTU Motoren- und Turbinen-Union
Friedrichshafen GmbH
Patentabteilung ZJXP
88040 Friedrichshafen (DE)**

(54) **Verfahren zum Auswuchten einer Welle mit einem Schwingungstilger**

(57)    Die Erfindung betrifft ein Verfahren zum Auswuchten einer Welle, insbesondere einer Gelenkwelle mit darauf angeordnetem Schwingungstilger. Der Schwingungstilger besteht aus einer mit der Welle verbundenen Nabe, einem zu dieser konzentrisch liegenden Tilgerring, sowie Nabe und Tilgerring elastisch verbindenden Elementen. Auf einer Wuchtmaschine wird die Unwucht des Gesamtsystems ermittelt und parallel dazu am Tilgerring die Rundlaufabweichung gemessen.

Aus der Rundlaufabweichung wird eine der Unwucht des Tilgerrings entsprechende Unwucht ermittelt und durch Bildung der Differenz aus Gesamtunwucht und Unwucht des Tilgerrings die Unwucht der Welle ohne Tilgerring bestimmt. Das erfindungsgemäße Auswuchtverfahren vermindert die Herstellungskosten durch Reduzierung der Durchlaufzeiten beim Auswuchten. Zugleich wird eine Funktionsverbesserung und eine Lebensdauererhöhung des Schwingungstilgers erzielt.

## Fig. 1

EP 1 099 945 A2

**Beschreibung**

Es sind Verfahren bekannt, die Unwucht von Rotoren, wie sie auch rotierende Wellen darstellen, durch Auswuchten zu beseitigen. Zum Auswuchten wird die Welle auf einer Wuchtmaschine in Drehung versetzt und Größe und Lage der Unwucht angezeigt. Zuviel Masse wird an bestimmten Stellen durch Bohrungen entfernt, oder es können zum Ausgleich an den der Unwucht gegenüberliegenden Stellen Gewichte angebracht werden.

Aus der DE 41 20 197 A1 geht ein Verfahren zum Auswuchten zweier miteinander verbundener Wellen als bekannt hervor. Dabei wird auf das Auswuchten der Gesamteinheit verzichtet. Vielmehr wird die Rundlaufabweichung der ersten Welle, nämlich einer Getriebe-Abtriebswelle, ermittelt und unter Berücksichtigung der relevanten Gesamtrotormasse, die alle mit den Wellen verbundenen Rotormassen beinhaltet, ein rechnerisch ermitteltes Ausgleichsgewicht angebracht. Die zweite Welle, eine Gelenkwelle, die mit der Getriebe-Abtriebswelle gekoppelt ist, kann noch zusätzlich separat gewuchtet werden. Eine noch vorhandene Restunwucht der Gelenkwelle wird markiert und dann beide Wellen derart montiert, daß die Restunwucht der Gelenkwelle der Rundlaufabweichung der Abtriebswelle gegenüberliegt.

Beim Auswuchten von Gelenkwellen mit einem Schwingungstilger wird üblicherweise so vorgegangen, daß die Gelenkwelle soweit als möglich komplettiert, nämlich mit anmontierten Kupplungs- und Verschraubungselementen, aber ohne Schwingungstilger ausgewuchtet und entsprechende Massenausgleichsgewichte angebracht werden. Anschließend wird die komplette Gelenkwelle einschließlich Schwingungstilger und weiteren, nur zusammen mit dem Schwingungstilger montierbaren Kupplungs- und Verschraubungselementen in drei Wuchtebenen ausgewuchtet, wobei zum Massenausgleich am Tilgerring des Schwingungstilgers Masse abgebohrt wird. Der Nachteil an einer derartigen Vorgehensweise ist, daß zwei Arbeitsgänge zum Wuchten erforderlich sind, was einen hohen Aufwand darstellt. Von Nachteil ist ferner, daß zur Komplettierung der Gelenkwelle am Schwingungstilger noch zusätzlich notwendige Bauteile wie Gelenkscheibe und Verschraubungselemente einer Kupplung montiert werden, die die Verbindung mit einer Antriebswelle herstellt. Die Unwucht dieser zusätzlichen Bauteile wird dem Tilgerring des Schwingungstilgers zugeschlagen, was keine optimale Tilgerfunktion bedingt.

Ein Schwingungstilger, wie er zur Schwingungsdämpfung im Antriebsstrang von Fahrzeugen verwendet wird, ist beispielsweise in der DE-AS 25 08 212 oder der DE-OS 25 34 684 dargestellt.

Der im Patentanspruch 1 angegebenen Erfindung liegt das Problem zugrunde, die Herstellungskosten durch Reduzierung der Durchlaufzeit beim Auswuchten zu vermindern, zugleich auch eine Funktionsverbesserung und eine Lebensdauererhöhung des Schwingungstilgers zu erzielen.

Dieses Problem wird durch die im Patentanspruch 1 aufgeführten Merkmale gelöst. Die Taktzeit beim Auswuchten wird dadurch verkürzt, daß die Ermittlung der Unwucht des Tilgerrings des Schwingungstilgers und der Gelenkwelle in einem Arbeitsgang erfolgt, wobei die Unwucht des aus Gelenkwelle mit Anbauteilen und Schwingungstilger bestehenden Gesamtsystems in herkömmlicher Weise durch Auswuchten und die Unwucht des Tilgerrings durch Rundlaufmessung festgestellt wird. Die anteilige Unwucht der Gelenkwelle mit damit starr verbundenen Massen ist die Differenz aus der Unwucht des Gesamtsystems und der Tilgerringunwucht. Die erforderlichen Rechenoperationen werden zweckmäßigerweise von der Auswuchtmaschine vorgenommen, die mit entsprechender Software ausgestattet ist. Eine Verbesserung der Wuchtqualität ergibt sich dadurch, daß die Gelenkwelle komplett mit allen Anbauteilen montiert ist, und dadurch eine exakte Trennung der vom Tilgerring und der von der Gelenkwelle mit Anbauteilen herrührenden Unwuchten möglich ist. Es ergibt sich daraus natürlich auch eine Funktionsverbesserung des Tilgers. Ferner wird seine Lebensdauer erhöht, da die elastischen Elemente des Schwingungstilgers aufgrund der geringeren Kräfte geringer belastet sind.

Ein Ausführungsbeispiel der Erfindung ist in der Zeichnung dargestellt und wird im folgenden näher beschrieben.

Es zeigen:

Figur 1    einen Längsschnitt einer Gelenkwelle mit angebautem Schwingungstilger;

Figur 2    eine Ansicht des Schwingungstilgers.

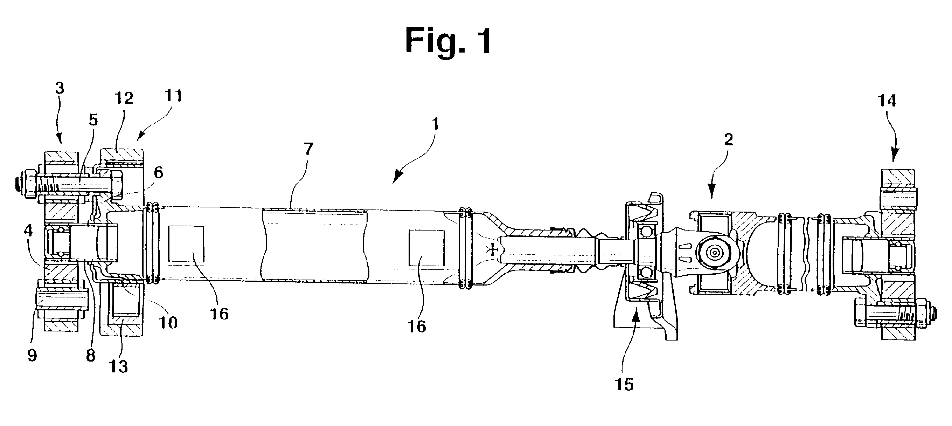

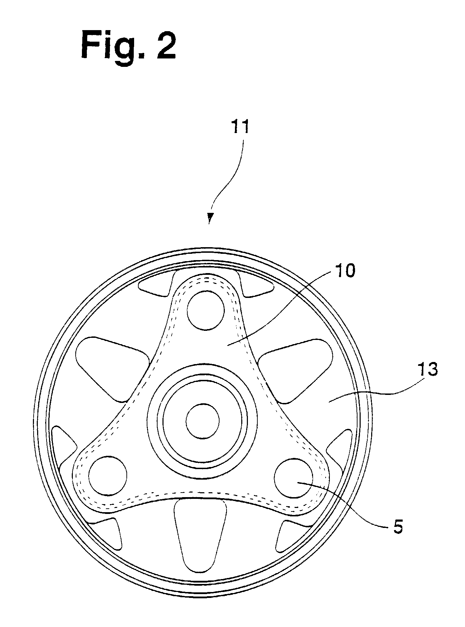

In Figur 1 sind zwei durch ein Kreuzgelenk 2 miteinander verbundene Gelenkwellenabschnitte einer Gelenkwelle 1 dargestellt, wobei ein in vollständiger Länge dargestellter Gelenkwellenabschnitt über eine elastische Kupplung 3 mit einer nicht dargestellten Getriebeausgangswelle einer ebenfalls nicht dargestellten Brennkraftmaschine verbunden ist. Die elastische Kupplung 3 besteht aus einer Gelenkscheibe 4, die über Schrauben 5 an einem Befestigungsflansch 6 eines Gelenkwellenrohrs 7 der Gelenkwelle 1 befestigt ist. Die Getriebeausgangswelle greift mit einem Zapfen in eine Zentrierhülse 8 ein. Die Verbindung der Getriebeausgangswelle mit der Gelenkscheibe 4 erfolgt über einen nicht dargestellten dreisternigen Flansch, der durch in Schraubendurchgangslöchern 9 angeordneten, nicht dargestellten Schrauben mit der Gelenkscheibe 4 verbunden wird. An dem Befestigungsflansch 6 der Gelenkwelle 1 ist mit den selben Schrauben 5, mit denen auch die Kupplung 3 am Befestigungsflansch 6 befestigt ist, die Nabe 10 eines Schwingungstilgers 11 an der Gelenkwelle 1 festgemacht. Die Tilgermasse des Schwingungstilgers 11 wird von einem zur Nabe 10 konzentrisch liegenden, äußeren Tilgerring 12 gebildet. Zwischen dem zylindrischen Innenumfang des Tilgerrings 12 und dem Außenumfang der konzentrisch zum Tilgerring 12 liegenden Nabe 10 befinden sich elastische Elemente 13, die infolge der Dreiecksform der Nabe 10 im wesentlichen aus drei segmentförmigen Körpern bestehen. Eine Ansicht des Schwingungstilgers 11 1 ist in Figur 2 dargestellt. Der Tilgerring 12 macht zur Dämpfung von Drehungleichförmigkeiten gegenüber der Nabe 10 radiale Ausgleichsbewegungen. Die Nabe 10 besteht im wesentlichen aus einem radialen Befestigungsflansch und einem sich in Umfangsrichtung erstreckenden, axial abgebogenen Rand, der mit den elastischen Elementen 13 verbunden ist.

Das erfindungsgemäße Wuchtverfahren erfolgt nach folgendem Ablauf:

Die Gelenkwelle 1 wird komplett montiert. Eine komplette Gelenkwelle besteht aus dem in Figur 1 dargestellten ersten Abschnitt mit angebautem Schwingungstilger 11 und ebendort angebauter Kupplung 3 mit Verschraubung, sowie einem über das Kreuzgelenk 2 mit dem in der Länge unvollständig dargestellten weiteren Gelenkwellenabschnitt, der auf der dem Kreuzgelenk entgegengesetzten Ende mit einer Kupplung 14 verbunden ist. Die derart komplettierte, im Bereich des Kreuzgelenks in einem Lager 15 gelagerte Gelenkwelle, wird nun auf einer nicht dargestellten Wuchtmaschine in Drehung versetzt und bei einer Drehzahl von ca. 3000 $min^{-1}$ dynamisch in drei Radialebenen ausgewuchtet, wobei eine Radialebene im Bereich des Schwingungstilgers 11 liegt. Während der Drehung wird die Gesamtunwucht von der Wuchtmaschine in Betrag und Winkellage aufgenommen. Parallel dazu wird am Tilgerring 12 die Rundlaufabweichung gemessen. Die Messung der Rundlaufabweichung erfolgt beispielsweise mittels eines Lasermeßgeräts oder mittels eines induktiven Meßsystems. Aus dem Meßergebnis der Rundlaufabweichung läßt sich bei bekannter Geometrie und Material des Tilgerrings 12 seine Unwucht nach folgender Gleichung berechnen:

$$\vec{U_T} = M_T \cdot \vec{e}[gmm]$$

$\vec{U_T}$ = Unwucht - Tilgerring

$\vec{e}$ = Exzentrizität des Tilgerrings

$M_T$ = Tilgerringmasse

Der Berechnungsalgorithmus ist zweckmäßigerweise in der Software der Wuchtmaschine enthalten. Aufgrund des Berechnungsergebnisses für die Tilgerringunwucht zeigt die Maschine die Winkellage und die abzubohrende Masse an, indem Anzahl der Bohrungen, Ort und die Bohrungstiefe angegeben werden. Die Software der Wuchtmaschine ermöglicht es im weiteren, die Differenz aus der Gesamtunwucht und der für die Tilgermasse ermittelten Unwucht zu bilden und errechnet hieraus die Unwucht der Gelenkwelle 1 und der damit starr verbundenen Bauteile ohne Tilgerring 11 in Bezug auf Lage und aufzubringende Masse, angezeigt für definierte Bereiche, in denen Wuchtbleche 16 angeordnet sind. Die Berechnungsgleichung lautet:

$$\vec{U_g} = \vec{U_G} - \vec{U_T}$$

$\vec{U_g}$ = Unwucht der Gelenkwelle + Anbauteile
$\vec{U_G}$ = Gesamtunwucht
$\vec{U_T}$ = Tilgerringunwucht

Die Wuchtung ist nach Abbohren der Masse am Schwingungstilger und Aufbringen der Ausgleichsmassen an der Gelenkwelle beendet.

Das erfindungsgemäße Wuchtverfahren führt zu einer Kostenreduzierung durch Verringerung der Taktzeiten, da die Feststellung der Unwucht von Welle und Tilgerring in einem Arbeitsgang bei komplett montierter Gelenkwelle erfolgt. Eine Funktionsverbesserung des Tilgers ergibt sich dadurch, daß die elastische Kupplung bei komplett mit Tilgerring montierter Gelenkwelle in den Wuchtvorgang einbezogen ist und dadurch die Unwucht des Tilgerrings nicht verfälscht wird. Bei herkömmlichen Wuchtverfahren, wo in einem ersten Arbeitsgang die Gelenkwelle ohne Schwingungstilger und damit auch ohne damit verbundene elastische Kupplung erfolgt, und erst im zweiten Gang die elastische Kupplung mit Schwingungstilger angebaut wird, würde die Unwucht der Kupplung dem Tilgerring zugerechnet. Aufgrund der Qualitätsverbesserung durch exaktes Auswuchten ergibt sich eine Lebensdauerverbesserung, da durch die genaue Wuchtung des Tilgerrings geringere Kräfte in den elastischen Elementen auftreten. Zugleich ist der Schwingungstilger in der Lage, die gewünschte Frequenz besser zu halten, was eine Funktionsverbesserung darstellt.

**Patentansprüche**

1.  Verfahren zum Auswuchten einer Welle, insbesondere einer Gelenkwelle (1), mit einem darauf angeordneten Schwingungstilger (11), bestehend aus einer mit der Welle verbundenen Nabe (10), einem zu dieser konzentrisch liegenden Tilgerring (12) sowie beide Teile elastisch verbindenden elastischen Elementen (13), dadurch gekennzeichnet, daß die Unwucht der aus Welle und Schwingungstilger (11) bestehenden Gesamtanordnung in Größe und Winkellage in zumindest einer Ebene ermittelt wird und parallel dazu am Tilgerring (12) die Rundlaufabweichung gemessen wird, daß eine der Rundlaufabweichung entsprechende Unwucht des Tilgerrings (12) unter Zugrundelegung bekannter Geometrie- und Materialdaten des Tilgerrings (12) berechnet wird, daß durch Bildung der Differenz aus Gesamtunwucht der Welle und Unwucht des Tilgerrings (12) die Unwucht der Welle ohne Tilgerring (12) bestimmt wird, und daß an Welle und Tilgerring (12) ein der Lage und Größe der Unwuchten entsprechender Masseausgleich vorgenommen wird.

2. Verfahren nach Anspruch 1, dadurch gekennzeichnet, daß der Masseausgleich am Tilgerring (12) durch Abnehmen von Rotormasse erfolgt.

3. Verfahren nach Anspruch 1 oder 2, dadurch gekennzeichnet, daß der Wuchtvorgang bei einer Drehzahl von ca. 3000 min$^{-1}$ erfolgt.

4. Verfahren nach einem der Ansprüche 1 bis 3, dadurch gekennzeichnet, daß das Auswuchten in drei Ebenen erfolgt, wobei eine Ebene im Bereich des Schwingungstilgers (11) liegt.

5. Verfahren nach einem der Ansprüche 1 bis 4, dadurch gekennzeichnet, daß die Welle beim Wuchten Gelenkscheiben (4) und Verschraubungselemente (5) einer Kupplung (3, 14) beinhaltet.

6. Verfahren nach einem der Ansprüche 1 bis 5, dadurch gekennzeichnet, daß das Berechnungsverfahren zur Berechnung der Unwucht der Software der Wuchtmaschine zugeordnet ist.

# Fig. 1

EP 1 099 945 A2

# Fig. 2